# EUROPÄISCHE PATENTSCHRIFT

(11) **EP 3 428 493 B1**
(45) Veröffentlichungstag und Bekanntmachung des Hinweises auf die Patenterteilung: **30.12.2020**
(21) Anmeldenummer: 18173186.0
(22) Anmeldetag: 18.05.2018
(51) Int. Cl.: F16K 27/02, F16K 15/02, F15B 13/02

(54) **DOPPELRÜCKSCHLAGVENTIL**
DOUBLE CHECK VALVE
CLAPET ANTIRETOUR DOUBLE

(30) Priorität: 11.07.2017 DE 102017006545
(43) Veröffentlichungstag der Anmeldung: 16.01.2019
(73) Patentinhaber: WABCO GmbH, 30453 Hannover (DE)
(72) Erfinder: PABIS, Kamil, 42-130 Kalej (PL); RIEDIGER-JANISCH, Karl-Heinz, 30455 Hannover (DE)

(56) Entgegenhaltungen:
- DE-A1-102014 218 753
- US-A- 2 917 273
- US-A- 4 027 851
- US-A1- 2005 109 407
- US-A1- 2008 099 083
- US-A1- 2014 284 061

## Beschreibung

Die Erfindung betrifft eine elektropneumatische Handbremse eines Nutzfahrzeugs, welche einen Ventilblock mit mindestens einem Doppelrückschlagventil aufweist. Doppelrückschlagventile sind in verschiedenen Ausführungsformen als pneumatische oder hydraulische Wechsel-, Drossel- oder Zweidruck-Ventile mit in der Regel zwei Eingängen als Steueranschlüsse und einem Ausgang bekannt. Sie werden häufig in Luftaufbereitungseinheiten von Nutzfahrzeugen für verschiedene Steuerungsaufgaben, beispielsweise zur Verbindung und Trennung mehrerer Luftkreise mit Druckluftspeichern, als Überlastschutz von Komponenten oder Bremsnotlöseventile bei der Druckluftversorgung pneumatischer Systeme, wie beispielsweise Feststellbremsanlagen, Betriebsbremsen, Nebenverbrauchern, Kupplungen und Getrieben, verbaut. Beispielhaft wird hierzu auf die DE 10 2015 008 377 A1, die DE 10 2011 107 490 A1 und die DE 195 10 492 A1 hingewiesen. Weitere Anwendungsgebiete sind Luftfederanlagen sowie hydraulische Strömungsmaschinen.

Ein derartiges Doppelrückschlagventil kann in der Regel in zwei Sperrrichtungen oder im gegenseitigen Wechsel in jeweils einer von zwei Sperrrichtungen durch eine in Schließrichtung wirkende Feder- oder Druckkraft schließen, sowie in einer dritten Richtung von einem strömenden Fluid durch Überwinden der Schließkraft an einem oder beiden Eingängen freigegeben werden. Beispielsweise kann ein Doppelrückschlagventil bewirken, dass stets der größere von zwei an den Eingängen des Doppelrückschlagventils anliegenden Drücken an dem Ausgang des Doppelrückschlagventils ausgegeben wird, oder dass nur dann, wenn der größere der beiden Drücke an einem bestimmten der beiden Eingänge anliegt, der Ausgang freigegeben und ansonsten gesperrt ist.

DE102014218753A1 offenbart eine hydraulische Ventileinheit, über die Hochdrücke aus mehreren anstehenden Drücken auswählbar sind. Weiterhin offenbart das Dokument eine hydrostatische Einheit mit einer derartigen hydraulischen Ventileinheit.

US2005109407A1 offenbart ein pneumatisches Handwerkzeug mit einer Steuerventileinheit.

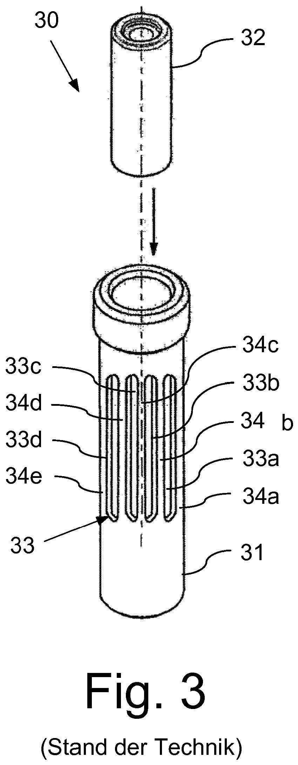

Ein bekanntes Doppelrückschlagventil 30 gemäß dem Stand der Technik zeigt Fig. 3. Es weist eine zylindrische Hülse 31 sowie ein längliches, zylindrisches Führungsteil 32 auf, welches in die Hülse 31 längsverschiebbar einführbar ist und mit seinen stirnseitigen Enden zwei in Reihe liegende, gegensinnig wirkende Rückschlagventile bilden kann. Die Fig. 3 zeigt die Hülse 31 und das Führungsteil 32 in einem noch nicht zusammengebauten Zustand. In den Mantel der Hülse 31 sind mehrere, über deren Umfang gleichmäßig verteilte und in Längsrichtung der Hülse 31 langestreckte Auslassöffnungen 33a, 33b, 33c, 33d ausgebildet, die einen Auslass 33 für ein Druckfluid zur Verfügung stellen. In dem gezeigten Beispiel sind vier derartige Öffnungen sichtbar. Typischerweise können bei einer derartigen Hülse 31 mit einem Außendurchmesser von 20 mm bis 25 mm bis zu zwölf solcher Auslassöffnungen 33a, 33b, 33c, 33d vorhanden sein. Die Auslassöffnungen 33a, 33b, 33c, 33d sind durch jeweils dazwischen angeordnete schmale Stege 34a, 34b, 34c, 34d, 34e voneinander getrennt.

Eine solche Hülse 31, welche beispielsweise aus Kunststoff gefertigt sein kann, weist eine relativ filigrane Struktur insbesondere im Bereich der Stege 34a, 34b, 34c, 34d, 34e auf. Daher ist eine bestimmte Mindestbreite der Stege 34a, 34b, 34c, 34d, 34e und eine bestimmte Mindestwandstärke der Hülse 31 erforderlich, um eine ausreichende Stabilität und Langlebigkeit gegen die bei Schaltvorgängen im Betrieb angreifenden üblichen Kräfte und Momente zu gewährleisten. Andererseits werden für bestimmte Anwendungen, wie beispielsweise für die Integration in Ventileinheiten von weiterentwickelten elektropneumatischen Handbremsen, von den Herstellern enge Vorgaben hinsichtlich des verfügbaren Einbauraums für benötigte Doppelrückschlagventile gemacht. Zudem ist der Kostendruck wie immer hoch.

Vor diesem Hintergrund lag der Erfindung die Aufgabe zugrunde, eine elektropneumatische Handbremse eines Nutzfahrzeugs der eingangs genannten Art vorzuschlagen, wobei die elektropneumatische Handbremse einen Ventilblock mit mindestens einem Doppelrückschlagventil aufweist, das eine kompakte Bauweise ermöglicht und dennoch in seiner Struktur stabil sowie langlebig ist. Der äußere Durchmesser eines solchen Doppelrückschlagventils soll möglichst klein konzipiert werden können. Insbesondere soll ein solches Doppelrückschlagventil bei geringem Kosten- und Fertigungsaufwand in ein Ventilsystem implementiert werden können.

Die Lösung dieser Aufgabe wird mit einer elektropneumatischen Handbremse eines Nutzfahrzeugs erreicht welche die Merkmale des unabhängigen Anspruchs aufweist, während vorteilhafte Ausgestaltungen und Weiterbildungen der Erfindung den zugeordneten Unteransprüchen entnehmbar sind.

Der Erfindung lag die Erkenntnis zugrunde, dass ein Doppelrückschlagventil der eingangs genannten Art in einer kleineren Größe, insbesondere mit einem kleineren Außendurchmesser nicht einfach dadurch geschaffen werden kann, indem das bestehende Design unter Einhaltung der Proportionen verkleinert wird. Dabei hat sich herausgestellt, dass die gitterartige Struktur der bisherigen Hülse mit den sehr dünnen Zwischenstegen zwischen den Auslassöffnungen durch einfaches Skalieren auf eine kleinere Größe erheblich an Stabilität verliert und den Beanspruchungen durch die betriebstypischen Strömungskräfte kaum standhalten kann. Andererseits war eine rund um den Hülsenkörper mit Öffnungen versehene Hülse auch nur deshalb notwendig, damit die Hülse invariant beim Drehen um ihre Längsachse gegenüber einer ortsfesten Druckfluidabführung ist. Gerät das abzuführende Druckfluid dazu noch in eine Rotationsbewegung, können durch das Vorbeiströmen des Fluids an der Gitterstruktur mit mehreren Öffnungen bevor es an der Druckfluidabführung ausströmt zudem Turbulenzen erzeugt werden, welche Energieverluste und letztlich verlängerte Ventilschaltzeiten zur Folge haben können. Eine Ventilhülse mit einer gitterartigen Struktur kann nicht die gleiche Stabilität aufweisen und eine laminare Durchströmung des Ventils nicht so begünstigen wie das eine umfänglich überwiegend geschlossene und gegenüber einer Druckfluidabführung feststehende Hülse kann. Eine umfänglich überwiegend geschlossene und gegenüber einer Druckfluidabführung feststehende Hülse kann dagegen in einer sehr kompakten Bauform mit einem geringeren Durchmesser ausgeführt werden und dennoch die geforderte Festigkeit gewährleisten.

Die Erfindung betrifft daher eine elektropneumatische Handbremse eines Nutzfahrzeugs, welche einen Ventilblock mit mindestens einem Doppelrückschlagventil aufweist, wobei das Doppelrückschlagventil mit einer Hülse und einem Führungsteil vorgesehen ist, welches längsverschiebbar in die Hülse einführbar und mittels Beaufschlagung durch ein Druckfluid darin axial bewegbar ist, und bei dem der Mantel der Hülse einen Auslass für das Druckfluid aufweist.

Zur Lösung der gestellten Aufgabe ist bei diesem Doppelrückschlagventil vorgesehen, dass der Auslass durch lediglich eine Auslassöffnung im Mantel der Hülse gebildet ist, dass die Fläche der Auslassöffnung klein im Verhältnis zur Gesamtfläche des Mantels der Hülse ist, und dass an der Hülse ein Sicherungselement angeordnet oder ausgebildet ist, mit dem die Hülse in einer festen Winkelstellung an einem Bauteil positionierbar ist, wobei in der festen Winkelstellung die eine Auslassöffnung in Richtung zu einer an dem Bauteil angeordneten Druckfluidabführung ausgerichtet und gegen ein Verdrehen in Bezug zur Druckfluidabführung gesichert ist.

Demnach erlaubt die Ausbildung der Hülse des Doppelrückschlagventils mit nur einer Auslassöffnung eine Verkleinerung der Hülse. Insbesondere wird die Schaffung einer Hülse mit einem geringeren Durchmesser bei hinreichender Stabilität im Vergleich zu Hülsen von bisherigen Doppelrückschlagventilen ermöglicht. Bei einer entsprechenden Verkleinerung des inneren Führungsteils kann somit ein Doppelrückschlagventil mit einem deutlich verringerten Durchmesser zur Verfügung gestellt werden, dass dennoch hohen Beanspruchungen standhält.

Insbesondere wird es ermöglicht, die kompakt bauende Hülse aus einem Material wie Kunststoff herzustellen, und dabei die Anforderungen an Festigkeit und Widerstandsfähigkeit gegen Strömungskräfte sicher zu erfüllen. Zudem ist die Herstellung im Vergleich zur Herstellung einer bisherigen Kunststoffhülse mit einem filigranen, gitterartig strukturierten Hülsenkörper einfacher und kostengünstiger. Das Sicherungselement der Hülse ermöglicht eine Fixierung der Hülse beziehungsweise des Doppelrückschlagventils in einer Bohrung oder Ausnehmung eines aufnehmenden Bauteils in einer bestimmten festen Winkelstellung, welche eine gleichbleibende, strömungstechnisch optimale Ausrichtung gegenüber einer festen Druckfluidabführung des aufnehmenden Bauteils sicherstellt. Eine Drehung der Hülse um ihre Längsachse in der Bohrung ist somit ausgeschlossen. Dadurch werden strömungstechnisch bedingte Energieverluste, wie sie etwa durch Turbulenzen in einer rotierenden Hülse und/oder an einer vielfach unterbrochenen Oberflächenstruktur einer Hülseninnenseite entstehen können, weitestgehend vermieden. Im Ergebnis wird eine schnelle Druckbeaufschlagung und Druckentlastung des Doppelrückschlagventils erreicht. Folglich werden kurze Schaltzeiten des Doppelrückschlagventils ermöglicht. Die erwähnte Druckfluidabführung im das Doppelrückschlagventil aufnehmenden Bauteil ist üblicherweise als eine Abführbohrung ausgebildet.

Gemäß einer Ausführungsform der Erfindung kann die eine Auslassöffnung vorteilhaft als ein Langloch ausgebildet sein, welches sich in Längsachsenrichtung der Hülse in dem Mantel der Hülse erstreckt. Dadurch kann das Druckfluid effektiv in Abflussrichtung geleitet werden.

Erfindungsgemäß ist das Bauteil ein Ventilblock, welcher eine Bohrung aufweist, in der das Doppelrückschlagventil aufnehmbar und als Funktionselement integrierbar ist, wobei die Bohrung ein Gegenelement zu dem Sicherungselement der Hülse aufweist, welches mit dem Sicherungselement formschlüssig in Eingriff bringbar ist, so dass das Sicherungselement und das Gegenelement im Eingriff zusammen eine Verdrehsicherung der Hülse in der Bohrung des Bauteils bilden.

Ein Doppelrückschlagventil mit einem vergleichsweise kleineren Durchmesser ist für seine Implementierung in einem Bauteil raumsparender und kostengünstiger als das eingangs beschriebene bisherige Doppelrückschlagventil. Erfindungsgemäß ist das Bauteil ein Ventilblock, der einer elektropneumatischen Handbremse innerhalb einer Luftaufbereitungseinheit eines Nutzfahrzeugs zugehörig ist. Das Doppelrückschlagventil mit den Merkmalen der Erfindung weist in einer kompakten Bauform mit verringertem Durchmesser eine hohe Zuverlässigkeit, Betriebssicherheit sowie Langlebigkeit auf und ist daher besonders vorteilhaft für Anwendungen, welche eine möglichst kompakte Bauform erfordern, wie bei einer Implementierung in eine neuartige elektropneumatische Handbremse geeignet. Die Einsparung von Einbauraum für das Doppelrückschlagventils erlaubt eine Verkleinerung des gesamten Ventilblocks und/oder schafft Bauraum für den Einbau zusätzlicher neuer Ventilkomponenten.

Das Design eines Doppelrückschlagventils gemäß der Erfindung mit nur einer Auslassöffnung und einer Verdrehsicherung auch bei solchen Doppelrückschlagventilen vorteilhaft verwirklicht werden, die in ihrem Durchmesser im Vergleich zu bisherigen Doppelrückschlagventilen nicht verringert werden sollen. Die Verdrehsicherung verhindert vorteilhaft, dass sich die Ventilhülse in der Bohrung des Bauteils drehen kann. Die feste Winkelstellung der Hülse ist dabei vorzugsweise so gewählt und angeordnet, dass die Auslassöffnung zur Druckmittelabführung in dem Ventilblock hin derartig ausgerichtet ist, dass ein effektiver Druckfluidabfluss gewährleistet ist.

Gemäß einer weiteren nicht erfindungsgemäßen Ausführungsform kann vorgesehen sein, dass ein erstes Sicherungselement als eine sich in Hülsenlängsrichtung erstreckende längliche Rippe ausgebildet ist, welche von der Mantelfläche einer ersten Hülse radial vorsteht, und dass ein erstes Gegenelement als eine zu dem Sicherungselement formschlüssig passende Nut ausgebildet ist, welche in der Bohrung des Bauteils ausgenommen ist.

Dabei kann vorteilhaft vorgesehen sein, dass das erste Sicherungselement und die Auslassöffnung im Mantel der Hülse seitlich einander gegenüberliegend angeordnet sind.

Die Verdrehsicherung fixiert die Winkelstellung der Hülse zuverlässig in der vorgesehen Winkelstellung in der Bohrung des die Hülse des Doppelrückschlagventils aufnehmenden Bauteils. Zugleich kann die Rippe den Mantel der Hülse zusätzlich verstärken und stabilisieren. Dadurch kann eine solche Hülse mit einem sehr kleinen Außendurchmesser, beispielsweise im Bereich zwischen 5 mm bis 8 mm ausgebildet sein, welches im Vergleich zu einer herkömmlichen Hülse, die üblicherweise einen Außendurchmesser von 20 mm bis 25 mm aufweist, eine erhebliche Verkleinerung ist. Die rippenverstärkte Hülse kann dem bei einem solchen System maximal vorkommenden Strömungsdruck sicher standhalten.

Erfindungsgemäß ist vorgesehen, dass ein Sicherungselement als eine an einem endseitigen Kopfstück der Hülse angeordnete nockenartige Erhebung ausgebildet ist, welche sich von der Mantelfläche einer Hülse radial erhebt, und dass ein Gegenelement als eine zu dem Sicherungselement formschlüssig passende Ausbuchtung ausgebildet ist, welche an der Bohrung des erwähnten Bauteils ausgebuchtet ist, welches das Doppelrückschlagventil aufnimmt.

Dabei kann vorteilhaft vorgesehen sein, dass das Sicherungselement und die Auslassöffnung auf der gleichen Seite und axial hintereinander am Mantel der Hülse angeordnet sind.

Demnach ist die Hülse an einem axialen Ende mit einer asymmetrischen Ausformung versehen. Die erforderliche Gegenkontur zu dieser Ausformung in dem Bauteil kann an dem entsprechenden Ende der Bohrung vorgefertigt werden Diese Verdrehsicherung ist besonders einfach und kostengünstig herstellbar.

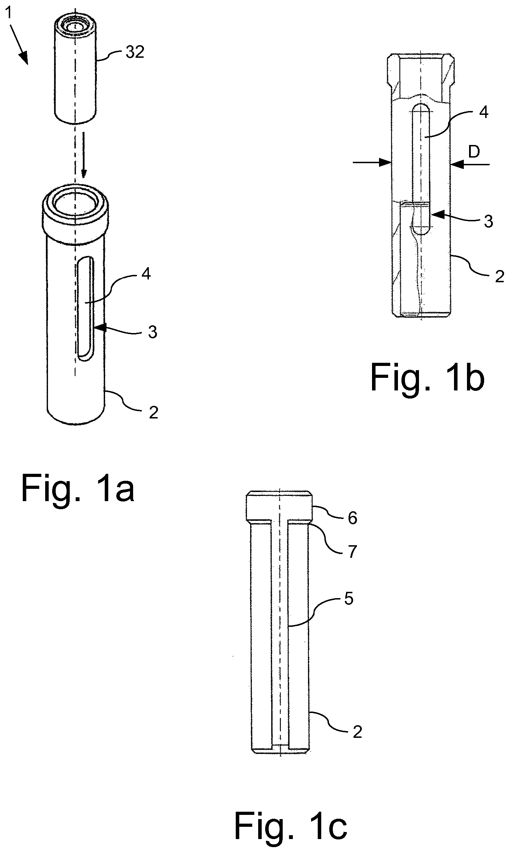

Die Erfindung wird nachstehend anhand von in der beigefügten Zeichnung dargestellten Ausführungsbeispielen näher erläutert. In der Zeichnung zeigt
Fig. 1a eine perspektivische Ansicht einer nicht erfindungsgemäßen Ausführungsform eines Doppelrückschlagventils,
Fig. 1b ein Längsschnitt durch eine Hülse des Doppelrückschlagventils gemäß
Fig. 1a mit nur einer Auslassöffnung,
Fig. 1c eine zu der Auslassöffnung gegenüberliegende Seite der Hülse gemäß
Fig. 1a mit einem ersten Sicherungselement,
Fig. 1d einen perspektivischen Ausriss eines als Ventilblock ausgebildeten Bauteils mit dem Doppelrückschlagventil gemäß Fig. 1a vor dessen Einbau mit Blick auf dessen Auslassöffnung,
Fig. 1e eine weitere perspektivische Ansicht des Bauteils mit dem Doppelrückschlagventil gemäß Fig. 1a vor dessen Einbau mit Blick auf dessen Sicherungselement,
Fig. 1f ein Schnitt durch das Bauteil mit dem eingebauten Doppelrückschlagventil gemäß Fig. 1a in einer ersten Schaltstellung,
Fig. 1g ein weiterer Schnitt durch das Bauteil mit dem eingebauten Doppelrückschlagventil gemäß Fig. 1a in einer zweiten Schaltstellung,
Fig. 1h ein vergrößerter Querschnitt A-A durch das Bauteil im Ausriss mit dem eingebauten Doppelrückschlagventil gemäß Fig. 1a,
Fig. 2a eine perspektivische Ansicht eines Doppelrückschlagventils für eine erfindungsgemäße elektropneumatische Handbremse eines Nutzfahrzeugs,
Fig. 2b ein Längsschnitt durch eine Hülse des Doppelrückschlagventils gemäß

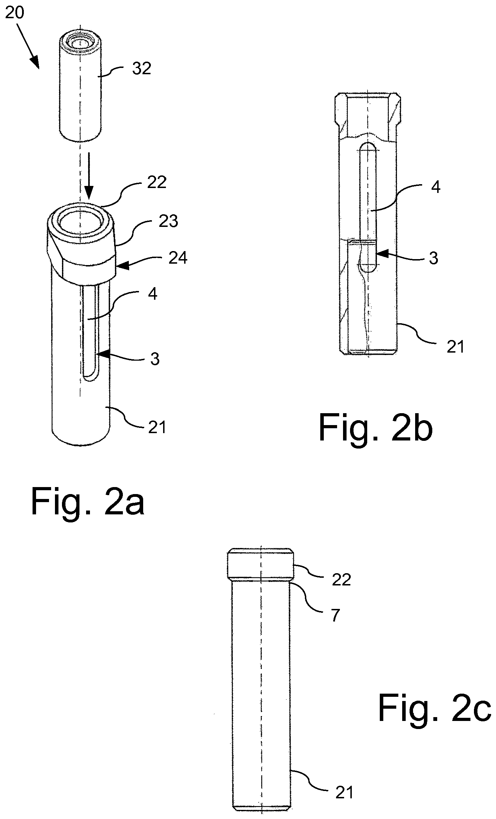

Fig. 2a mit einer Auslassöffnung,
Fig. 2c eine der Auslassöffnung gegenüberliegende Seite der Hülse gemäß Fig. 2a, und
Fig. 3 eine perspektivische Ansicht eines Doppelrückschlagventils gemäß dem Stand der Technik.

Einige Bauelemente in den Figuren stimmen überein, so dass sie mit denselben Bezugsziffern versehen sind.

Das Doppelrückschlagventil 30 gemäß dem Stand der Technik, welches in Fig. 3 gezeigt ist, wurde bereits eingangs erläutert. Im Unterschied dazu weist das in den Figuren 1a bis 1h dargestellte erste Doppelrückschlagventil 1 gemäß der Erfindung eine erste Hülse 2 mit einem Durchlass 3 auf, welcher durch lediglich eine Auslassöffnung 4 gebildet ist. Wie in Fig. 1b genauer erkennbar ist, ist die Auslassöffnung 4 als ein länglicher Durchbruch durch den Mantel der Hülse 2 ausgebildet, welcher sich in Richtung parallel zur Längsachse der Hülse 2 mit Abstand von den stirnseitigen Enden der Hülse 2 erstreckt. Die Auslassöffnungsenden sind hier abgerundet. Fig. 1c zeigt die umfangsbezogen andere Seite der Hülse 2, welche sich gegenüber der Auslassöffnung 4 befindet.

Im weiteren Unterschied zum bekannten Doppelrückschlagventil 30 weist die Hülse 2 ein Sicherungselement auf. Gemäß dem in Fig. 1c dargestellten ersten Ausführungsbeispiel ist hier ein erstes Sicherungselement 5 vorhanden, welches als eine Rippe ausgebildet ist, die sich radial vom Mantel der Hülse 2 erhebt und in Hülsenlängsrichtung verläuft. In dem gezeigten Beispiel erstreckt sich das Sicherungselement 5 nahezu über die gesamte Hülsenlänge. An einem axialen Ende mündet es in ein erstes Kopfstück 6, welches an der Hülse 2 ausgebildet oder angeordnet ist. Das Kopfstück 6 weist einen etwas größeren Außendurchmesser als der Hülsenkörper auf, so dass sich ein über den Umfang verlaufender Absatz 7 zwischen dem Kopfstück 6 und dem übrigen Hülsenkörper ergibt.

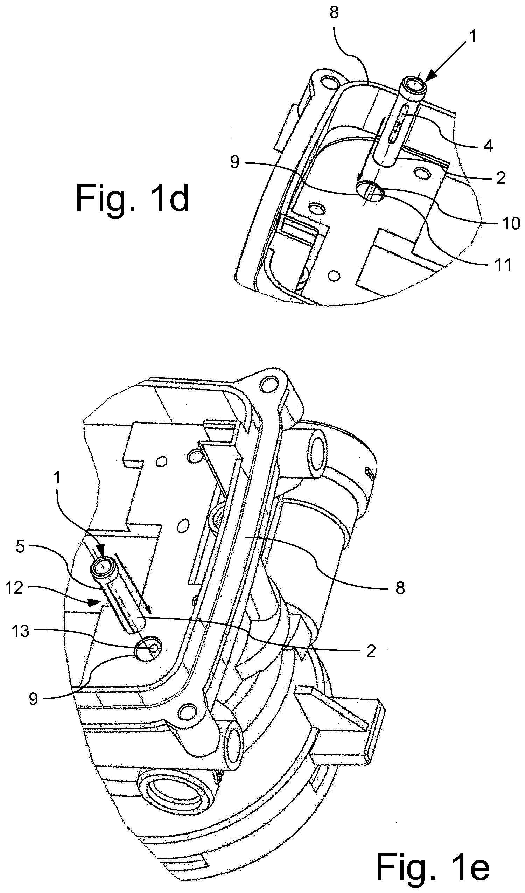

Die Fig. 1d zeigt das Doppelrückschlagventil 1 in einer zum Einbau in ein als Ventilblock ausgebildetes Bauteil 8 vorbereiteten Montageposition. Das Bauteil 8 kann beispielsweise Teil einer elektropneumatischen Handbremse sein und zu einer Luftaufbereitungseinheit eines Lastkraftwagens gehören. Um das Doppelrückschlagventil 1 darin als Funktionselement aufzunehmen, weist das Bauteil 8 eine Bohrung 9 auf. Diese Bohrung 9 weist einen Rand 10 auf, auf welchem die Hülse 2 im montierten Zustand mit ihrem Kopfstück 6 zum Aufliegen gelangt. Die Darstellung in Fig. 1d zeigt das Doppelrückschlagventil 1 mit Blick auf die Auslassöffnung 4. Weiterhin ist darin ein Gegenelement 11 zu dem Sicherungselement 5 erkennbar. Dieses erste Gegenelement 11 ist als eine axiale Nut ausgebildet, welche die Bohrung 9 lokal erweitert. Das Gegenelement 11 weist ein geometrisch kongruentes Gegenprofil zu dem Sicherungselement 5 auf. Im montierten Zustand des Doppelrückschlagventils 1 greift das Sicherungselement 5 formschlüssig in das Gegenelement 11 ein und bildet auf diese Weise zusammen mit dem Gegenelement 11 eine erste Verdrehsicherung 12, welche die Hülse 2 daran hindert, sich in der Bohrung 9 um ihre Längsachse drehen zu können.

Die Fig. 1e zeigt eine weitere Ansicht des Bauteils 8, allerdings in einer um etwa einen Winkel von 180° gedrehten Perspektive, welche den Blick auf das Sicherungselement 5 der Hülse 2 in der zur Montage vorbereiteten Position freigibt. In dieser Ansicht ist weiterhin eine Druckfluidabführung 13 erkennbar, welche als eine in dem Bauteil 8 schräg verlaufende Bohrung ausgebildet ist, die mit der Bohrung 9, welche das Doppelrückschlagventil 1 in sich aufnimmt, verbunden ist.

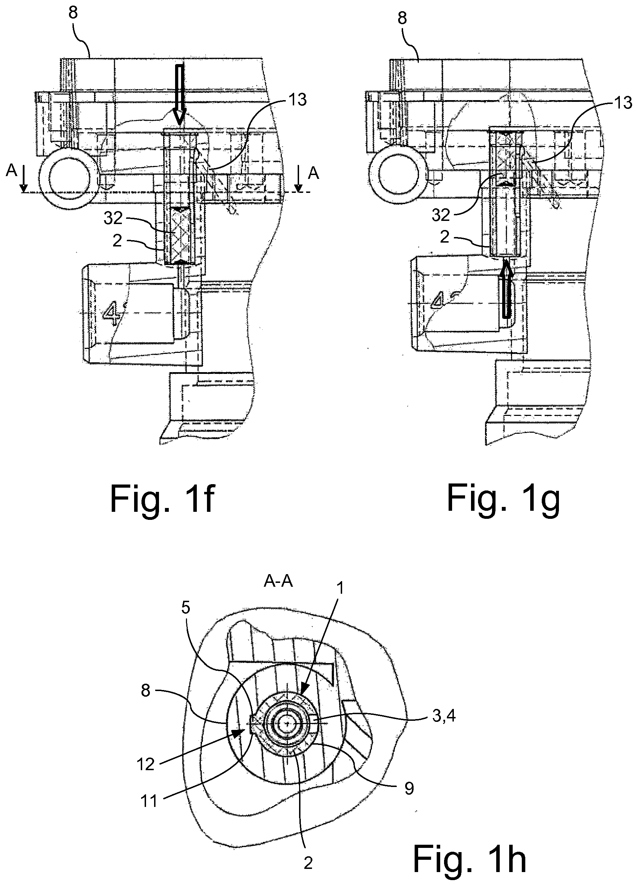

Der Verlauf der Druckfluidabführung 13 in dem Bauteil 8 gegenüber der Einbaulage des Doppelrückschlagventils 1 ist in Fig. 1f deutlicher erkennbar. Die Fig. 1f zeigt das montierte Doppelrückschlagventil 1 in einer ersten Schaltstellung. Die wirksame Druckmittelzufuhr erfolgt über einen nicht näher bezeichneten ersten von zwei Einlässen und ist durch den Pfeil angedeutet. Der erste Druck überwiegt einen möglichen zweiten Druck, welcher an dem entgegengesetzten, ebenfalls nicht näher bezeichneten zweiten Einlass anliegen kann. Die Druckfluidabführung 13 ist durch das Führungsteil 32 daher freigegeben.

Fig. 1g zeigt das Doppelrückschlagventil 1 in einer zweiten Schaltstellung. Die wirksame Druckmittelzufuhr erfolgt in dieser Schaltstellung über den entgegengesetzten zweiten Einlass, an dem nun der größere Druck anliegt. Dadurch wurde das Führungsteil 32 axial verschoben und versperrt dadurch die Druckfluidabführung 13.

Zur Vervollständigung dieses Ausführungsbeispiels zeigt die Fig. 1h noch das eingebaute Doppelrückschlagventil 1 in einem Querschnitt A-A des Bauteils 8. Darin wird die Lage des rippenartigen Sicherungselements 5 im formschlüssigen Eingriff mit dem Gegenelement 11 in der Bohrung 9 des Bauteils 8 besonders deutlich sowie die Anordnung der am Mantel der Hülse 2 gegenüberliegenden Auslassöffnung 4.

An dieser Stelle sei darauf hingewiesen, dass das erfindungsgemäße Doppelrückschlagventil 1 gemäß den Figuren 1a bis 1h zur Vereinfachung grafisch etwa gleich groß dargestellt ist wie das Doppelrückschlagventil 30 gemäß dem Stand der Technik in Fig. 3. Das Doppelrückschlagventil 1 gemäß den Figuren 1a bis 1h kann aber in einer tatsächlichen Realisierung einen wesentlich kleineren äußeren Durchmesser D aufweisen als das bekannte Doppelrückschlagventil 30 gemäß Fig. 3.

Die Figuren 2a bis 2c zeigen eine zweite Ausführungsform mit einem Doppelrückschlagventil 20, welches eine Hülse 21 aufweist. Die Hülse 21 weist ein Kopfstück 22 sowie ein Sicherungselement 23 auf. Das Sicherungselement 23 ist als ein Nocken ausgebildet, der sich radial von dem Kopfstück 22 weg erstreckt. Das Sicherungselement 23 ist hier einstückig mit dem Kopfstück 22 verbunden. Es erhebt sich auf der Seite der Auslassöffnung 4 von der Hülse 21. Die Bohrung 9 zur Aufnahme des Doppelrückschlagventils 20 in dem Bauteil 8 weist hier eine entsprechende Ausbuchtung als formschlüssiges Gegenprofil zu dem Sicherungselement 23 auf (nicht dargestellt), um mit diesem eine Verdrehsicherung 24 zu bilden. Die Auslassöffnung 4 ist, wie in Fig. 2b erkennbar, baugleich zum Doppelrückschlagventil 1 gemäß Fig. 1b ausgebildet. Dafür entfällt, wie die Fig. 2c zeigt, das rippenartige erste Sicherungselement 5 gemäß Fig. 1c.

### Bezugszeichenliste (Teil der Beschreibung)

- 1: Erstes Doppelrückschlagventil (1. Ausführungsform)
- 2: Erste Hülse (1. Ausführungsform)
- 3: Auslass (gemäß der Erfindung)
- 4: Auslassöffnung (gemäß der Erfindung)
- 5: Erstes Sicherungselement (1. Ausführungsform)
- 6: Erstes Kopfstück (1. Ausführungsform)
- 7: Absatz
- 8: Bauteil
- 9: Bohrung in Bauteil 8
- 10: Rand der Bohrung 9
- 11: Erstes Gegenelement (1. Ausführungsform)
- 12: Erste Verdrehsicherung
- 13: Druckfluidabführung
- 20: Doppelrückschlagventil (2. Ausführungsform)
- 21: Hülse (2. Ausführungsform)
- 22: Kopfstück (2. Ausführungsform)
- 23: Sicherungselement (2. Ausführungsform)
- 24: Verdrehsicherung (2. Ausführungsform)
- 30: Doppelrückschlagventil (gemäß Stand der Technik)
- 31: Hülse (gemäß Stand der Technik)
- 32: Führungsteil
- 33: Auslass (gemäß Stand der Technik)
- 33a - 33d: Mehrere Auslassöffnungen (gemäß Stand der Technik)
- 34a - 34e: Mehrere Stege (gemäß Stand der Technik)
- D: Außendurchmesser des Doppelrückschlagventils 1, 20

## Patentansprüche

1. Eine elektropneumatische Handbremse eines Nutzfahrzeugs, welche einen Ventilblock (8) mit mindestens einem Doppelrückschlagventil (20) aufweist, wobei der Ventilblock (8) eine Bohrung (9) aufweist, in der das Doppelrückschlagventil (20) aufnehmbar und als Funktionselement integrierbar ist, wobei das Doppelrückschlagventil (20) eine Hülse (21) und ein Führungsteil (32) umfasst, welches längsverschiebbar in die Hülse (21) einführbar und mittels Beaufschlagung durch ein Druckfluid darin axial bewegbar ist, und bei dem der Mantel der Hülse (21) einen Auslass (3) für das Druckfluid aufweist, **dadurch gekennzeichnet, dass** der Auslass (3) durch lediglich eine Auslassöffnung (4) im Mantel der Hülse (21) gebildet ist, dass die Fläche der Auslassöffnung (4) klein im Verhältnis zur Gesamtfläche des Mantels der Hülse (21) ist, und dass an der Hülse (21) ein Sicherungselement (23) angeordnet oder ausgebildet ist, mit dem die Hülse (21) in einer festen Winkelstellung an dem genannten Ventilblock (8) positionierbar ist, wobei in der festen Winkelstellung die eine Auslassöffnung (4) in Richtung zu einer an dem Ventilblock (8) angeordneten Druckfluidabführung (13) ausgerichtet und gegen ein Verdrehen in Bezug zur Druckfluidabführung (13) gesichert ist, wobei das Sicherungselement (23) als eine an einem endseitigen Kopfstück (22) der Hülse (21) angeordnete nockenartige Erhebung ausgebildet ist, welche sich von der Mantelfläche der genannten Hülse (21) radial erhebt, und dass ein Gegenelement als eine zu dem Sicherungselement (23) formschlüssig passende Ausbuchtung ausgebildet ist, welche an der Bohrung (9) des Ventilblocks (8) ausgebuchtet ist.

2. Die elektropneumatische Handbremse nach Anspruch 1, **dadurch gekennzeichnet, dass** die eine Auslassöffnung (4) als ein Langloch ausgebildet ist, welches sich in Längsachsenrichtung der Hülse (21) in dem Mantel der Hülse (21) erstreckt.

3. Die elektropneumatische Handbremse nach Anspruch 1 oder 2, **dadurch gekennzeichnet, dass** das Sicherungselement (23) und das Gegenelement (11) im Eingriff zusammen die Verdrehsicherung (24) der Hülse (21) in der Bohrung (9) des Ventilblocks (8) bilden.

4. Die elektropneumatische Handbremse nach Anspruch 1, **dadurch gekennzeichnet, dass** das Sicherungselement (23) und die Auslassöffnung (4) auf der gleichen Seite und axial hintereinander am Mantel der Hülse (21) angeordnet sind.

## Claims

1. Electropneumatic handbrake of a utility vehicle, which electropneumatic handbrake has a valve block (8) with at least one double check valve (20), wherein the valve block (8) has a bore (9) in which the double check valve (20) can be received and can be integrated as a functional element, wherein the double check valve (20) comprises a sleeve (21) and a guide part (32) which is insertable in longitudinally displaceable fashion into the sleeve (21) and which can be moved axially therein by being impinged on by a pressurized fluid and in the case of which the shell of the sleeve (21) has an outlet (3) for the pressurized fluid, **characterized in that** the outlet (3) is formed by only one outlet opening (4) in the shell of the sleeve (21), **in that** the area of the outlet opening (4) is small in relation to the overall area of the shell of the sleeve (21), and **in that**, on the sleeve (21), there is arranged or formed a securing element by means of which the sleeve (21) is positionable in a fixed angular position on said valve block (8), wherein, in the fixed angular position, the one outlet opening (4) is oriented in the direction of a pressurized fluid discharge path (13) arranged on the valve block (8) and is secured against rotation relative to the pressurized fluid discharge path (13), wherein the securing element (23) is formed as a cam-like elevation arranged on an end-side head piece (22) of the sleeve (21), which elevation is radially elevated from the shell surface of said sleeve (21), and **in that** a counterpart element is formed as an indentation which fits with the securing element (23) in positively locking fashion and which is indented at the bore (9) of the valve block (8).

2. Electropneumatic handbrake according to Claim 1, **characterized in that** the one outlet opening (4) is formed as a slot which extends in a longitudinal axis direction of the sleeve (21) in the shell of the sleeve (21) .

3. Electropneumatic handbrake according to Claim 1 or 2, **characterized in that** the securing element (23) and the counterpart element (11), when in engagement, together form the rotation-preventing securing means (24) of the sleeve (21) in the bore (9) of the valve block (8) .

4. Electropneumatic handbrake according to Claim 1, **characterized in that** the securing element (23) and the outlet opening (4) are arranged on the same side and axially one behind the other on the shell of the sleeve (21) .

## Revendications

1. Frein à main électropneumatique d'un véhicule utilitaire qui présente un bloc de soupapes (8) comprenant au moins un clapet antiretour double (20), le bloc de soupapes (8) présentant un perçage (9) dans lequel le clapet antiretour double (20) peut être logé et intégré en tant qu'élément fonctionnel, le clapet antiretour double (20) comprenant une douille (21) et une pièce de guidage (32) qui peut être introduite dans la douille (21) de manière longitudinalement coulissante et peut être déplacée axialement à l'intérieur de celle-ci au moyen d'une sollicitation par un fluide sous pression, et dans lequel l'enveloppe de la douille (21) présente une sortie (3) pour le fluide sous pression, **caractérisé en ce que** la sortie (3) est formée uniquement par une ouverture de sortie (4) dans l'enveloppe de la douille (21), **en ce que** la surface de l'ouverture de sortie (4) est petite par rapport à la surface totale de l'enveloppe de la douille (21), et **en ce que** sur la douille (21) est disposé ou réalisé un élément de blocage (23) qui permet de positionner la douille (21) dans une position angulaire fixe sur ledit bloc de soupapes (8), dans lequel, dans la position angulaire fixe, ladite une ouverture de sortie (4) est orientée en direction d'une évacuation de fluide sous pression (13) disposée sur le bloc de soupapes (8) et est verrouillée en rotation par rapport à l'évacuation de fluide sous pression (13), dans lequel l'élément de blocage (23) est réalisé sous la forme d'un bossage de type came, disposé sur une pièce de tête (22) terminale de la douille (21) et s'élevant radialement à partir de la surface latérale de ladite douille (21), et **en ce qu'**un contre-élément est réalisé sous la forme d'une courbure adaptée par complémentarité de forme à l'élément de blocage (23) et qui est courbée au niveau du perçage (9) du bloc de soupapes (8).

2. Frein à main électropneumatique selon la revendication 1, **caractérisé en ce que** ladite une ouverture de sortie (4) est réalisée sous la forme d'un trou oblong qui s'étend dans la direction d'axe longitudinal de la douille (21) dans l'enveloppe de la douille (21).

3. Frein à main électropneumatique selon la revendication 1 ou 2, **caractérisé en ce que** l'élément de blocage (23) et le contre-élément (11) en prise constituent conjointement le dispositif anti-rotation (24) de la douille (21) dans le perçage (9) du bloc de soupapes (8).

4. Frein à main électropneumatique selon la revendication 1, **caractérisé en ce que** l'élément de blocage (23) et l'ouverture de sortie (4) sont disposés du même côté et sont disposés axialement l'un après l'autre sur l'enveloppe de la douille (21).
